# EUROPÄISCHE PATENTSCHRIFT

(11) **EP 1 791 740 B1**
(45) Veröffentlichungstag und Bekanntmachung des Hinweises auf die Patenterteilung: **23.03.2011**
(21) Anmeldenummer: 05789494.1
(22) Anmeldetag: 20.09.2005
(51) Int. Cl.: B60T 8/32, B60T 13/66, B60T 17/22

(54) **VERFAHREN ZUM UNTERSTÜTZEN EINES BREMSENSYSTEMS BEI VERMINDERTER WIRKSAMKEIT DER FAHRZEUGBREMSANLAGE**
METHOD FOR SUPPORTING A BRAKE SYSTEM IN CASE OF REDUCED EFFECTIVENESS OF THE VEHICLE BRAKE SYSTEM
PROCEDE POUR ASSISTER UN DISPOSITIF DE FREINAGE EN CAS DE BAISSE D'EFFICACITE DU SYSTEME DE FREINAGE DU VEHICULE

(30) Priorität: 24.09.2004 DE 102004046377
(43) Veröffentlichungstag der Anmeldung: 06.06.2007
(73) Patentinhaber: Continental Teves AG & Co. oHG, 60488 Frankfurt (DE)
(72) Erfinder: KUZEL, Thomas, 63538 Gross-Krotzenburg (DE); KRÖBER, Jürgen, 56333 Winningen (DE); UMMER, Bernd, 65812 Bad Soden (DE); ESSLINGER, Holger, 55232 Alzey (DE)
(86) Internationale Anmeldenummer: PCT/EP2005/054689
(87) Internationale Veröffentlichungsnummer: WO 2006/032660

(56) Entgegenhaltungen:
- DE-A1- 10 137 273
- DE-A1- 10 238 427
- US-B1- 6 226 586

## Beschreibung

Die Erfindung betrifft ein Verfahren zum Erhöhen der Bremswirkung bei einem Kraftfahrzeug mit einer hydraulischen Bremsanlage, bei dem eine Energieversorgungseinheit, mittels derer der Bremsdruck in wenigstens einer Radbremse erhöht wird, eingeschaltet wird, wenn der von dem Fahrer in einem Hauptbremszylinder eingestellte Bremsdruck einen in Abhängigkeit von einer ermittelten Fahrzeugverzögerung bestimmten ersten Aktivierungsschwellenwert erreicht.

Hydraulische Bremsanlagen eines Fahrzeugs weisen bei hoher thermischer Belastung, bei einem Einfluss von Salzlösung oder Öl und bei starkem Verschleiß eine eingeschränkte Wirksamkeit auf, so dass die Bremsanlage selbst bei einem hohen durch den Fahrer eingestellten Vordruck innerhalb des Hauptbremszylinders keine ausreichende Verzögerung des Fahrzeugs bewirkt. Die Verringerung der Bremswirkung bei hohen Betriebstemperaturen der Bremsanlage wird dabei auch als Fading bezeichnet.

In den oben dargestellten Fällen resultiert die verminderte Bremswirkung der Fahrzeugbremsanlage jedoch insbesondere aus einem verminderten Reibungskoeffizienten zwischen den Brems-belägen und der Bremsscheibe, so dass ein besonderer Bremsdruck erforderlich ist, um das Fahrzeug wirkungsvoll abzubremsen.

Aus der deutschen Offenlegungsschrift DE 102 38 427 A1 ist hierzu bereits ein Verfahren der eingangs genannten Art bekannt, bei dem im Falle einer eingeschränkten Wirksamkeit der Fahrzeugbremse durch das Zuschalten einer Energiequelle der Bremsdruck bzw. die Bremskraft in den Radbremsen erhöht wird. Ein derartiges Verfahren wird auch als FBS-Funktion (FBS: Fading Brake Support) bezeichnet.

Die Aktivierung der Energiequelle, bei der es sich üblicherweise um eine Pumpe handelt, erfolgt bei der FBS-Funktion dann, wenn der durch den Fahrer eingestellte Vordruck im Hauptbremszylinder eine Aktivierungsschwelle übersteigt, die in Abhängigkeit der Fahrzeugverzögerung ermittelt wird. Die Pumpe wird somit eingeschaltet, wenn die tatsächliche Fahrzeugverzögerung die aufgrund des eingestellten Vordrucks bei einwandfrei funktionierender Bremsanlage erwartete Fahrzeugverzögerung um einen bestimmten Wert unterschreitet.

Dabei hat es sich gezeigt, dass es bei Gespannen, die aus einem Fahrzeug und einem beladenen ungebremsten Anhänger bestehen, häufig zu Fehlauslösungen der FBS-Funktion kommt, d.h. die FBS-Funktion aktiviert wird, obwohl die Bremsanlage des Fahrzeugs ihre normale Bremsleistung aufweist.

Dies ist für den Fahrer eines solchen Gespanns sehr nachteilig, da bei einem Bremsvorgang mittels der fehlausgelösten FBS-Funktion eine wesentlich höhere Bremsleistung erreicht wird als der Fahrer erwartet und wünscht. Dies führt zu einer erheblichen Komforteinbuße für den Fahrer. Zudem kann ein unerwartet heftiges Abbremsen des Fahrzeugs Auffahrunfälle provozieren.

Es ist daher eine Aufgabe der vorliegenden Erfindung, die dargestellten Nachteile des Standes der Technik zu vermeiden, und dabei insbesondere Fehlauslösungen der FBS-Funktion bei aus einem Fahrzeug und einem Anhänger bestehenden Fahrzeuggespannen zu verhindern.

Erfindungsgemäß wird diese Aufgabe durch ein Verfahren mit den Merkmalen des Patentanspruchs 1 gelöst.

Nach der Erfindung ist es dabei vorgesehen, dass ein Verfahren der eingangs genannten Art so durchgeführt wird, dass überprüft wird, ob ein ungebremster Anhänger an das Fahrzeug angekoppelt ist, und dass der Aktivierungsschwellenwert erhöht wird, falls das Vorhandensein eines an dem Fahrzeug angekoppelten ungebremsten Anhängers festgestellt wird.

Die Erfindung geht dabei von der Idee aus, Fehlauslösungen der FBS-Funktion dadurch zu verhindern, dass bei Fahrzeuggespannen mit einem ungebremsten Anhänger eine erhöhte Aktivierungsschwelle für die Aktivierung der FBS-Funktion zugrunde gelegt wird. Auf diese Weise wird die FBS-Funktion auch bei Fahrzeuggespannen, bei denen die Fahrzeugverzögerung mit einem beladenen, ungebremsten Anhänger bei gleichem Bremsdruck geringer ist, nur dann ausgelöst, wenn die Bremswirkung der Bremsanlage tatsächlich verringert ist.

In einer vorteilhaften Ausführungsform der Erfindung ist es vorgesehen, dass die Überprüfung, ob ein ungebremster Anhänger an das Fahrzeug angekoppelt ist, anhand eines Vergleichs zwischen wenigstens einem während eines Bremsvorgangs vorliegenden Wert des Bremsdrucks und einem im Wesentlichen gleichzeitig mit dem Wert des Bremsdrucks vorliegenden Wertes der Fahrzeugverzögerung erfolgt.

Mit Vorteil erfolgt die Überprüfung, ob ein ungebremster Anhänger an das Fahrzeug angekoppelt ist, somit anhand eines Lernalgorithmus, der anhand eines Vergleichs des während eines Bremsvorgangs erfassten Vordrucks und der erfassten Fahrzeugverzögerung das Vorhandensein eines ungebremsten Anhängers überprüft.

Dieses Vorgehen beruht darauf, dass zwischen dem Vordruck und der Fahrzeugverzögerung zumindest näherungsweise ein linearer Zusammenhang besteht, der insbesondere von der Gesamtmasse des Fahrzeugs bzw. des Fahrzeuggespanns beeinflusst wird. Dieser Einfluss führt dabei beispielsweise dazu, dass bei einer höheren Gesamtmasse auch ein höherer Vordruck einzustellen ist, um eine bestimmte Fahrzeugverzögerung zu erreichen.

Bei einwandfrei funktionierenden Bremsen besteht der zumindest näherungsweise lineare Zusammenhang dabei allerdings nur dann, wenn die Räder des Fahrzeugs bei dem Bremsvorgang nicht blockieren, bzw. wenn der Bremsvorgang ohne einen ABS-Eingriff durchgeführt wird, bei dem der Radbremsdruck gegenüber dem Vordruck verringert wird, um ein Blockieren der Räder zu verhindern.

Vorzugsweise wird daher überprüft, ob der Bremsdruck in dem Hauptbremszylinder einen Blockierdruck überschreitet und der genannte Vergleich nur dann vorgenommen wird, wenn festgestellt wird, dass der Bremsdruck unterhalb eines Blockierdrucks liegt.

Mit dem Begriff Blockierdruck wird dabei der Wert des Bremsdrucks bezeichnet, bei dem die Räder beginnen zu blockieren, d.h. der Radschlupf einen bestimmten Schwellenwert überschreitet. Der Blockierdruck wird dabei üblicherweise in einem Antiblockiersystem (ABS) ermittelt und entspricht dem Druck, bei dem das ABS aktiviert wird.

In einer zweckmäßigen Ausführungsform der Erfindung erfolgt daher die Überprüfung, ob der Bremsdruck in dem Hauptbremszylinder einen Blockierdruck überschreitet, anhand eines Signals, welches den Aktivierungszustand eines ABS angibt.

In weiteren vorteilhaften Ausführungsformen der Erfindung kann es zudem vorgesehen sein, dass der Vergleich nur dann vorgenommen wird, wenn der Wert des Bremsdrucks in dem Hauptbremszylinder innerhalb eines vorgegebenen Druckbereichs liegt und/oder wenn die Änderungsrate (Gradient) des Bremsdrucks unterhalb eines vorgegebenen Schwellenwertes liegt.

Der Druckbereich sowie der Schwellenwert für die Änderungsrate werden dabei derart festgelegt, dass anhand dieser Bedingungen ebenfalls zuverlässig sichergestellt werden kann, dass der Radschlupf so gering ist, dass der beschriebene näherungsweise lineare Zusammenhang zwischen dem Bremsdruck und der Fahrzeugverzögerung Gültigkeit besitzt.

In einer weiteren bevorzugten Ausführungsform der Erfindung ist es vorgesehen, dass bei der Überprüfung, ob ein ungebremster Anhänger an das Fahrzeug angekoppelt ist, ein Verhältnis zwischen dem Wert des Bremsdrucks in dem Hauptbremszylinder und dem Wert der Fahrzeugverzögerung mit einem vorgegebenen Schwellenwert verglichen wird.

Das Vorhandensein eines ungebremsten Anhängers wird dabei vorzugsweise dann festgestellt, wenn das Verhältnis zwischen dem Wert des Bremsdrucks und dem Wert der Fahrzeugverzögerung größer als der vorgegebene Schwellenwert ist.

In einer weiteren vorteilhaften Ausführungsform der Erfindung ist es vorgesehen, dass mehrere Wertepaare mit jeweils einem Wert des Bremsdrucks und einem Wert der Fahrzeugverzögerung zu verschiedenen Zeitpunkten während wenigstens eines Bremsvorgangs ermittelt werden, und dass für jedes Wertepaar das Verhältnis zwischen dem Wert des Bremsdrucks und dem Wert der Fahrzeugverzögerung bestimmt wird.

Die Überprüfung, ob ein ungebremster Anhänger an das Fahrzeug angekoppelt ist, erfolgt dabei vorzugsweise, indem aus den für die mehrere Wertepaare berechneten Verhältnissen ein Mittelwert gebildet und mit dem vorgegebenen Schwellenwert verglichen wird.

Das Vorhandensein eines an das Fahrzeug angekoppelten ungebremsten Anhängers wird dabei in einer zweckmäßigen Ausführungsform der Erfindung festgestellt, wenn der Mittelwert den Schwellenwert überschreitet.

Somit erfolgt die Überprüfung des Vorhandenseins eines ungebremsten Anhängers, der an das Fahrzeug angekoppelt ist, anhand einer Vielzahl von Werten für den Vordruck und die Fahrzeugbeschleunigung, die während eines Bremsvorgangs ermittelt werden, so dass eine sehr zuverlässige Feststellung bezüglich des Vorhandenseins eines derartigen Anhängers getroffen werden kann.

In einer weiteren zweckmäßigen Ausführungsform der Erfindung ist es vorgesehen, dass die Überprüfung, ob ein ungebremster Anhänger an das Fahrzeug angekoppelt ist, anhand einer Prüfung einer Belegung der elektrischen Anschlussverbindungen zwischen dem Fahrzeug und dem Anhänger erfolgt.

Das Vorhandensein eines an das Fahrzeug angekoppelten ungebremsten Anhängers wird dabei zweckmäßigerweise dann festgestellt, wenn von den Anschlussverbindungen des Anhängers eine Verbindung zur Ansteuerung einer Bremsanlage des Anhängers nicht belegt ist.

Hierbei handelt es sich um eine Alternative zu dem zuvor beschriebenen Lernalgorithmus, bei der jedoch, im Gegensatz zu dem Lernalgorithmus, der Beladungszustand des Anhängers nicht ermittelt werden kann.

In weiteren bevorzugten Ausführungsformen der Erfindung ist es zudem vorgesehen, dass überprüft wird, ob ein Stecker in einer Anhängersteckdose des Fahrzeugs eingesteckt ist, und dass die Überprüfung, ob ein ungebremster Anhänger an das Fahrzeug angekoppelt ist, nur dann durchgeführt wird, wenn festgestellt worden ist, dass ein Stecker in der Anhängersteckdose des Fahrzeugs eingesteckt ist.

Mit Vorteil erfolgt die Überprüfung des Vorhandenseins eines ungebremsten Anhängers hierdurch bedarfsgerecht, d.h. nur dann, wenn tatsächlich ein Anhänger an das Fahrzeug angekoppelt ist.

Weitere Vorteile, Besonderheiten und zweckmäßige Weiterbildungen der Erfindung ergeben sich aus den Unteransprüchen und der nachfolgenden Darstellung bevorzugter Ausführungsbeispiele der Erfindung anhand der Figuren.

Von den Figuren zeigt
- Fig. 1: den prinzipiellen Aufbau einer zur Ausführung der Erfindung geeigneten Fahrzeugbremsanlage,
- Fig. 2: ein Druck-Verzögerungs-Diagramm zur Darstellung der Aktivierungsschwelle der FBS-Funktion nach dem Stand der Technik und
- Fig. 3: ein Druck-Verzögerungs-Diagramm zur Darstellung der erfindungsgemäß erhöhten Aktivierungsschwelle der FBS-Funktion.

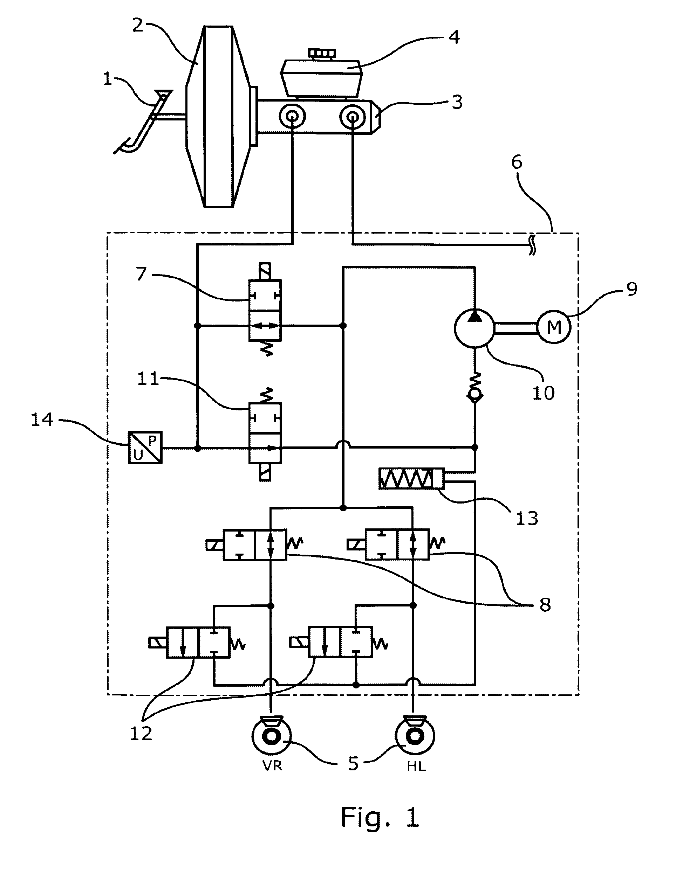

Die in der Figur 1 in einem Ausschnitt dargestellte, zur Ausführung der Erfindung geeignete Fahrzeugbremsanlage umfasst eine Betätigungseinrichtung 1, die über einen Bremskraftverstärker 2 mit einem Hauptbremszylinder 3 verbunden und vorzugsweise als Bremspedal ausgebildet ist.

Der Hauptbremszylinder 3 ist strömungsmäßig mit einem Vorratsbehälter 4 für Hydraulikflüssigkeit verbunden. Er ist vorzugsweise als so genannter Tandemhauptzylinder ausgeführt, bei dem jeweils eine von zwei gekoppelten Druckkammern zur Druckversorgung eines Bremskreises vorgesehen ist. Üblicherweise besteht dabei eine X-Aufteilung der Bremskreise, bei der eine Druckkammer die vordere rechte (VR) und die hintere linke (HL) Radbremse 5 versorgt und die andere Druckkammer die vordere linke und die hintere rechte Radbremse 5.

Mit den Radbremsen 5 ist der Hauptbremszylinder 3 über eine Hydraulikeinheit 6 verbunden, die für jeden der beiden Bremskreise in gleicher Weise ausgebildet ist. In der Figur 1 ist daher nur der einem der Bremskreise zugeordnete Teil der Hydraulikeinheit dargestellt.

Die Radbremsen 5 sind dabei über ein stromlos offenes Trennventil 7 mit dem Hauptbremszylinder 3 verbunden, wobei jeder Radbremse 5 zusätzlich ein Einlassventil 8 zugeordnet ist, das ebenfalls stromlos geöffnet ist. Bei einem ausschließlich durch den Fahrer gesteuerten Bremsvorgang wird der von dem Fahrer mittels des Bremskraftverstärkers 2 in dem Hauptbremszylinder 3 aufgebaute Bremsdruck p_{THZ}, der auch als Vordruck bezeichnet wird, direkt zu den Radbremsen 5 übertragen.

Die dargestellte Bremskraftanlage ermöglicht jedoch ebenfalls einen fremdkraftgesteuerten Aufbau eines Bremsdrucks in den Radbremsen 5 mittels der durch den Motor 9 angetriebenen Hydraulikpumpe 10. Zum Druckaufbau wird dabei das Trennventil 7 geschlossen und das stromlos geschlossene Umschaltventil 11 geöffnet, so dass zwischen dem Hauptbremszylinder 3 und der Saugseite der Hydraulikpumpe 10 eine Verbindung entsteht, und der Hauptbremszylinder 3 von der Druckseite der Hydraulikpumpe 10 entkoppelt wird. Die Hydraulikpumpe 10 ist damit in der Lage, Hydraulikflüssigkeit aus dem Hauptbremszylinder 3 bzw. dem Vorratsbehälter 4 in die Radbremsen 5 zu fördern, um den Radbremsdruck zu erhöhen.

Zur Verringerung des Bremsdrucks in den Radbremsen 5 ist jeder Radbremse 5 ein stromlos geschlossenes Auslassventil 12 zugeordnet. Wird das Auslassventil 12 geöffnet, kann Hydraulikflüssigkeit aus der entsprechenden Radbremse 7 in den Niederdruckspeicher 13 entweichen. Mittels der Hydraulikpumpe 10 kann die Hydraulikflüssigkeit aus dem Niederdruckspeicher 13 dann in den Hauptbremszylinder 3 zurückgefördert werden, wozu das Umschaltventil 11 sowie die Einlassventile 8 geschlossen werden und das Trennventil 7 geöffnet wird.

Darüber hinaus kann ein in den Radbremsen 5 vorhandener Bremsdruck konstant gehalten werden, indem sowohl das der Radbremse 5 zugeordnete Einlassventil 8 als auch das zugehörige Auslassventil 12 geschlossen werden.

Der von dem Fahrer innerhalb des Hauptbremszylinders 3 eingestellte Bremsdruck p_{THZ} wird mittels eines Drucksensors 14 gemessen, dessen Signal an ein Steuergerät übermittelt wird, welches die Steuerung der Hydraulikeinheit 6 bzw. der enthaltenen Ventile 7, 8, 11 und 12 und des Motors 9 vornimmt.

In der dargestellten Weise ausgeführte Bremsanlagen sind dem Fachmann insbesondere als ein Bestandteil von ESP-Systemen (ESP: Elektronisches Stabilitätsprogramm) bekannt, die bereits in einer Vielzahl von Fahrzeugen eingesetzt werden. Ebenfalls können solche Bremsanlagen innerhalb eines ABS-Systems (ABS: Antiblockiersystem) genutzt werden.

Darüber hinaus lässt sich mit solchen Bremsanlagen auch die FBS-Funktion realisieren, die Ausgangspunkt der vorliegenden Erfindung ist.

Bei der FBS-Funktion ist es vorgesehen, dass die Radbremsen 5 mittels der Hydraulikpumpe 10 mit einem gegenüber der Fahrervorgabe erhöhten Bremsdruck beaufschlagt werden, wenn während eines Bremsvorgangs eine verminderte Wirksamkeit der Bremsanlage festgestellt wird.

Dies entspricht der Aktivierung eines so genannten Bremsassistenten, dessen Funktion darin besteht, den Bremsdruck in den Radbremsen 5 gegenüber dem Bremsdruck p_{THZ} in dem Hauptbremszylinder 3 zu erhöhen. Der Bremsassistent wird dabei insbesondere auch in Notbremssituationen aktiviert und ist dem Fachmann an sich ebenfalls bekannt.

Zur Aktivierung der FBS-Funktion wird in Abhängigkeit von der mittels eines Längsbeschleunigungssensors gemessenen und/oder aus den Signalen von Raddrehzahlsensoren ermittelten Fahrzeugverzögerung |b| während eines Bremsvorgangs ein Aktivierungsschwellenwert p_{AS} für den Bremsdruck p_{THZ} innerhalb des Hauptbremszylinders 3 in dem zur Steuerung der FBS-Funktion vorgesehenen Steuergerät berechnet, wie es detailliert in der deutschen Offenlegungsschrift DE 102 38 427 A1 beschrieben wird, auf die hiermit im Zusammenhang mit der FBS-Funktion, insbesondere im Hinblick auf die Ermittlung des Aktivierungsschwellenwertes p_{AS} Bezug genommen wird.

Mit der Fahrzeugverzögerung |b| wird hier der Betrag der negativen Beschleunigung des Fahrzeugs während eines Bremsvorgangs bezeichnet.

Überschreitet der von dem Fahrer innerhalb des Hauptbremszylinders 3 eingestellte Bremsdruck p_{THZ} die Aktivierungsschwelle p_{AS}, so wird der Bremsassistent aktiviert. Vorzugsweise ist der Bremsassistent dabei als so genannter hydraulischer Bremsassistent (HBA) ausgeführt, bei dem die Druckerhöhung mittels der Hydraulikeinheit 6, d.h. insbesondere mittels der durch den Motor 9 angetriebenen Hydraulikpumpe 10 vorgenommen wird, wozu der Motor 9 und die Ventile 7, 11 in der entsprechenden Weise von dem FBS-Steuergerät angesteuert werden (d.h. das Trennventil 7 geschlossen und das Umschaltventil 11 geöffnet wird.)

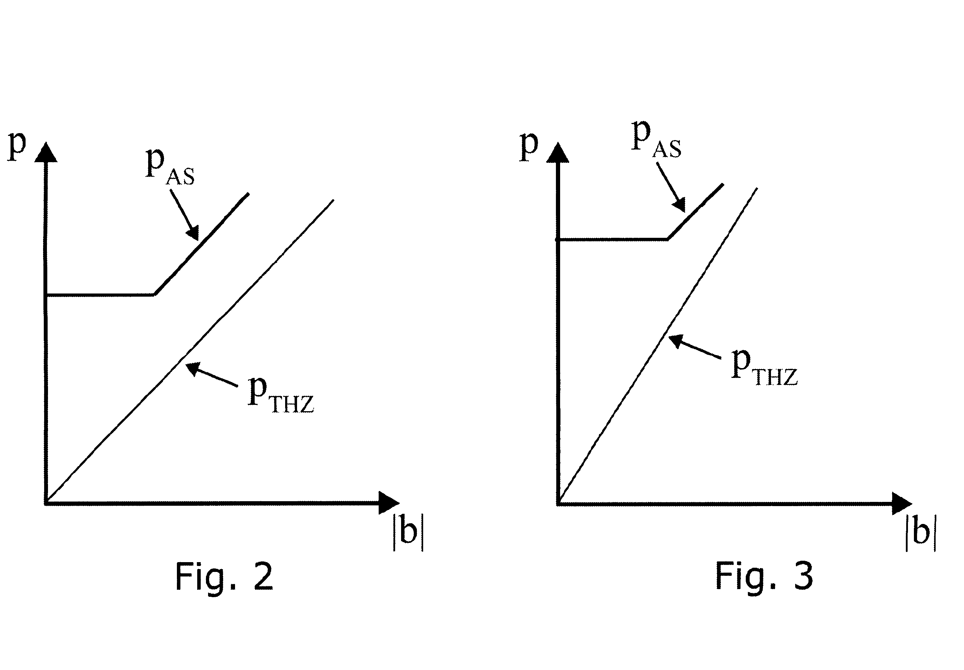

In der Figur 2 ist dabei der prinzipielle Verlauf des Aktivierungsschwellenwertes p_{TH} bei der bekannten Ausführungsform der FBS-Funktion in einem Druck-Verzögerungs-Diagramm aufgetragen, der sich in der im Folgenden beschriebenen Weise ergibt:
Bei intakter Bremse besteht bei einer Teilbremsung, d.h. bei einem Bremsvorgang, bei dem höchstens ein sehr geringer Radschlupf vorliegt bzw. bei dem kein ABS-Eingriff erfolgt, zumindest näherungsweise ein linearer Zusammenhang zwischen dem Bremsdruck p_{THZ} und der Fahrzeugverzögerung |b|. Die Fahrzeugverzögerung |b| ist dabei proportional zu dem Bremsdruck p_{THZ} innerhalb des Hauptbremszylinders 3. Eine entsprechende Druck-Verzögerungs-Kennlinie eines Fahrzeugs ist dabei beispielhaft in das Diagramm in Figur 2 eingezeichnet (siehe untere Kurve in dem Diagramm).

Die Aktivierungsschwelle p_{AS} der FBS-Funktion ist gegenüber dieser Kennlinie um einen Toleranzwert nach oben versetzt, und weist im Wesentlichen dieselbe Steigung auf wie die Kennlinie. Ferner ist die Aktivierungsschwelle p_{AS} auf einen Minimalwert begrenzt, so dass sich insgesamt der in der Figur 2 dargestellte Verlauf der Aktivierungsschwelle ergibt.

Ist an das Fahrzeug ein beladener ungebremster Anhänger angekoppelt, so steigt die mittels der Fahrzeugbremsanlage zu verzögernde Masse des Fahrzeugs bzw. des Fahrzeuggespanns. Dabei bleibt der lineare Zusammenhang zwischen dem Bremsdruck p_{THZ} und der Fahrzeugverzögerung |b| bestehen, die Steigung der Druck-Verzögerungs-Kennlinie wird jedoch größer, wie aus dem Diagramm in Figur 3 ersichtlich ist (siehe untere Kurve in dem Diagramm).

Dabei hat sich gezeigt, dass es bei unveränderter Aktivierungsschwelle p_{AS} häufig zu Fehlauslösungen der FBS-Funktion bei Fahrzeuggespannen mit einem beladenen ungebremsten Anhänger kommt.

Im Rahmen der vorliegenden Erfindung ist es daher vorgesehen, die Aktivierungsschwelle p_{AS} der FBS-Funktion zu erhöhen, wenn festgestellt wird, dass ein ungebremster Anhänger an das Fahrzeug angekoppelt ist.

Vorzugsweise wird dabei insbesondere der Minimalwert der Aktivierungsschwelle p_{AS} um einen vorgegebenen Betrag angehoben. Der Betrag liegt dabei zwischen 2 bar und 40 bar, vorzugsweise bei 5 bar. Dieser Wert ist in jedem Fall so groß zu wählen, dass es bei Anhängerbetrieb zu keiner Fehlauslösung der FBS-Funktion kommen kann.

Die Steigung der Aktivierungsschwelle p_{AS} wird in einer Ausführungsform der Erfindung nicht angepasst, so dass sich für die erhöhte Aktivierungsschwelle p_{AS},_{H} insgesamt der in dem Diagramm in Figur 3 dargestellte Verlauf ergibt.

In weiteren Ausführungsformen der Erfindung kann es jedoch ebenso vorgesehen sein, auch die Steigung der Aktivierungsschwelle p_{AS} vergrößern und damit den Verlauf der erhöhten Aktivierungsschwelle p_{AS,H} damit Druck-Verzögerungs-Kennlinie anzupassen.

Das Vorhandensein eines an das Fahrzeug angekoppelten ungebremsten Anhängers kann auf verschiedene Weisen geprüft werden, wobei die jeweils vorgesehene Überprüfung vorzugsweise nur dann vorgenommen wird, wenn von dem FBS-Steuergerät ermittelt worden ist, dass in die Anhängersteckdose des Fahrzeugs ein Stecker eingesteckt ist.

Eine Möglichkeit zur Prüfung des Vorhandenseins eines ungebremsten Anhängers besteht darin, dass anhand der elektrischen Anschlüsse des Anhängers nicht nur überprüft wird, ob ein Anhänger angekoppelt ist, sondern auch, ob es sich um einen gebremsten oder um einen ungebremsten Anhänger handelt.

Hierzu wird überprüft, ob der Anschluss bzw. Kontakt der Anhängersteckdose, über den ein Aktivierungssignal an die Bremsanlage eines gebremsten Anhängers übermittelt werden kann, belegt bzw. mit einem elektrischen Anschluss des Steckers verbunden ist. Ist dies nicht der Fall, wird von dem Steuergerät der FBS-Funktion festgestellt, dass ein ungebremster Anhänger an das Fahrzeug angekoppelt ist.

Bei dieser Vorgehensweise kann jedoch der Beladungszustand des Anhängers nicht ermittelt werden.

Vorzugsweise ist es daher im Rahmen einer weiteren Ausführungsform der Erfindung vorgesehen, einen Lernalgorithmus zu verwenden, bei dem bei jedem geeigneten Bremsvorgang das Verhältnis v = p_{THZ}/|b| zwischen dem Bremsdruck p_{THZ} und der Fahrzeugverzögerung |b| berechnet wird, wobei der Bremsdruck p_{THZ} mittels des Drucksensors 14 und die Fahrzeugverzögerung |b| aus den Signalen von Raddrehzahlsensoren oder mittels eines Längsbeschleunigungssensors bestimmt wird.

In bekannter Weise kann dabei auch anhand einer Erhöhung des Bremsdrucks p_{THZ} ermittelt werden, dass der Fahrer die Bremse betätigt und ein Bremsvorgang durchgeführt wird.

Geeignet für die Überprüfung des Vorhandenseins eines beladenen ungebremsten Anhängers sind dabei Bremsvorgänge, bei denen es sich um so genannte Teilbremsungen handelt, bei denen der Radschlupf sehr gering ist bzw. kein ABS-Eingriff erfolgt und somit der bereits erläuterte lineare Zusammenhang zwischen der Fahrzeugverzögerung |b| und dem Bremsdruck p_{THZ} besteht.

Bei Fahrzeugen, die mit einem ABS ausgerüstet sind - was in der Regel der Fall ist, wenn in dem Fahrzeug eine FBS-Funktion vorgesehen ist - kann eine Teilbremsung anhand eines Signals ermittelt werden, das den Aktivierungszustand des ABS angibt. Ermittelt das FBS-Steuergerät anhand dieses Signals, dass das ABS nicht aktiviert ist, handelt es sich somit um eine Teilbremsung.

Zusätzlich kann auch überprüft werden, ob der Bremsdruck p_{THZ} bei dem Bremsvorgang innerhalb eines vorgegebenen Bereichs von beispielsweise 20 bis 50 bar liegt und/oder der Gradient des Bremsdrucks p_{THZ} kleiner als ein vorgegebener Schwellenwert von beispielsweise 100 bar/s ist, um sicherzustellen, dass es sich um einen geeigneten Bremsvorgang handelt, bei dem die Proportionalität zwischen dem Bremsdruck p_{THZ} und der Fahrzeugverzögerung |b| besteht.

Während der geeigneten Teilbremsvorgänge, die in der oben beschriebenen Weise ermittelt werden, wird in dem FBS-Steuergerät zu verschiedenen Zeitpunkten, beispielsweise einmal in jedem Taktschritt des taktgesteuerten Steuergerätes, jeweils ein Wertepaar ermittelt, das den aktuellen Wert des Bremsdrucks p_{THZ} sowie den aktuellen Wert der Fahrzeugverzögerung |b| umfasst.

Für jedes Wertepaar wird dann das Verhältnis v zwischen dem Wert des Bremsdrucks p_{THZ} und dem Wert der Fahrzeugverzögerung |b| berechnet.

Die berechneten Verhältnisse werden über einen Zeitraum, der vorzugsweise einen Bremsvorgang der beschriebenen Art umfasst, gefiltert. Der gefilterte Wert wird mit einem vorgegebenen Schwellenwert verglichen, und die zuvor beschriebene Erhöhung der FBS-Aktivierungsschwelle p_{AS} wird von dem FBS-Steuergerät vorgenommen, wenn der aus den Verhältnissen ermittelte gefilterte Wert einen vorgegebenen Schwellenwert überschreitet.

Insbesondere ist es dabei vorgesehen, dass aus den für jedes während eines Bremsvorgangs ermittelte Wertepaar gebildeten Verhältnissen v zwischen dem Bremsdruck p_{THZ} und der Fahrzeugverzögerung |b| ein Mittelwert gebildet wird, wobei die für die erfassten Wertepaare gebildeten Verhältnisse v sukzessive zur Berechnung des Mittelwertes herangezogen werden, so dass beispielsweise in jedem Taktschritt des FBS-Steuergerätes ein aktualisierter Mittelwert gebildet wird. Der Mittelwert wird dann mit dem vorgegebenen Schwellenwert verglichen und die FBS-Aktivierungsschwelle p_{AS} angehoben, wenn der Mittelwert größer als der Schwellenwert ist.

Dabei kann es vorgesehen sein, dass - sofern ein Anhänger an das Fahrzeug angekoppelt ist - bei jedem Bremsvorgang ein Mittelwert aus den Verhältnissen v gebildet wird, und bei dessen Beendigung der Vergleich zwischen dem Mittelwert und dem vorgegebenen Schwellenwert vorgenommen wird.

Ist die Aktivierungsschwelle p_{AS} bereits erhöht und ergibt der Vergleich dabei, dass der Mittelwert kleiner als der Schwellenwert ist, was beispielsweise nach einem Entladen des Anhängers der Fall sein kann, wird die Aktivierungsschwelle wieder auf den ursprünglichen Wert herabgesetzt.

Die Erfindung stellt somit ein vorteilhaftes Verfahren bereit, mit dem Fehlauslösungen der FBS-Funktion bei Fahrzeuggespannen mit einem beladenen ungebremsten Anhänger vermieden werden, indem zur Auslösung der FBS-Funktion eine erhöhte Aktivierungsschwelle p_{AS,H} zugrunde gelegt wird, so dass die FBS-Funktion bei gleicher Fahrzeugverzögerung |b| erst bei einem höheren Bremsdruck p_{THZ} aktiviert wird. Die Überprüfung, ob eine ungebremster Anhänger an das Fahrzeug angekoppelt ist, erfolgt in vorteilhaften Ausführungsformen der Erfindung anhand eines Lernalgorithmus.

### Bezugszeichenliste:

- 1: Betätigungseinrichtung
- 2: Bremskraftverstärker
- 3: Hauptbremszylinder
- 4: Vorratsbehälter
- 5: Radbremse
- 6: Hydraulikeinheit
- 7: Trennventil
- 8: Einlassventil
- 9: Motor
- 10: Hydraulikpumpe
- 11: Umschaltventil
- 12: Auslassventil
- 13: Niederdruckspeicher
- 14: Drucksensor

- |b|: Fahrzeugverzögerung
- p: Druck
- p_{AS}: Aktivierungsschwelle
- p_{THZ}: Bremsdruck im Hauptbremszylinder

## Patentansprüche

1. Verfahren zum Erhöhen der Bremswirkung bei einem Kraftfahrzeug mit einer hydraulischen Bremsanlage, bei dem eine Energieversorgungseinheit, mittels derer der Bremsdruck in wenigstens einer Radbremse erhöht wird, eingeschaltet wird, wenn der von dem Fahrer in einem Hauptbremszylinder eingestellte Bremsdruck einen in Abhängigkeit von einer ermittelten Fahrzeugverzögerung bestimmten Aktivierungsschwelle überschreitet, **dadurch gekennzeichnet, dass** überprüft wird, ob ein ungebremster Anhänger an das Fahrzeug angekoppelt ist, und dass die Aktivierungsschwelle (p_{AS}) erhöht wird, falls das Vorhandensein eines an das Fahrzeug angekoppelten ungebremsten Anhängers festgestellt wird.

2. Verfahren nach Anspruch 1, **dadurch gekennzeichnet, dass** die Überprüfung, ob ein ungebremster Anhänger an das Fahrzeug angekoppelt ist, anhand eines Vergleichs zwischen wenigstens einem während eines Bremsvorgangs vorliegenden Wert des Bremsdrucks (p_{THZ}) und einem im wesentlichen gleichzeitig vorliegenden Wert der Fahrzeugverzögerung (|b|) erfolgt.

3. Verfahren nach Anspruch 2, **dadurch gekennzeichnet, dass** überprüft wird, ob der Bremsdruck (p_{THZ}) einen Blockierdruck überschreitet, und dass der Vergleich nur dann vorgenommen wird, wenn festgestellt wird, dass der Bremsdruck (p_{THZ}) unterhalb des Blockierdrucks liegt.

4. Verfahren nach Anspruch 3, **dadurch gekennzeichnet, dass** die Überprüfung, ob der Bremsdruck (p_{THZ}) den Blockierdruck überschreitet, anhand eines Signals erfolgt, welches den Aktivierungszustand eines Antiblockiersystems angibt.

5. Verfahren nach einem der Ansprüche 2 bis 4, **dadurch gekennzeichnet, dass** der Vergleich nur dann vorgenommen wird, wenn der Wert des Bremsdrucks (p_{THZ}) innerhalb eines vorgegebenen Druckbereichs liegt und/oder wenn die Änderungsrate des Bremsdrucks (p_{THZ}) unterhalb eines vorgegebenen Gradientenschwellenwertes liegt.

6. Verfahren nach einem der vorangegangenen Ansprüche, **dadurch gekennzeichnet, dass** bei der Überprüfung, ob ein ungebremster Anhänger an das Fahrzeug angekoppelt ist, ein Verhältnis (v) zwischen dem Wert des Bremsdrucks (p_{THZ}) und dem Wert der Fahrzeugverzögerung (|b|) mit einem vorgegebenen Schwellenwert verglichen wird.

7. Verfahren nach einem der vorangegangenen Ansprüche, **dadurch gekennzeichnet, dass** das Vorhandensein eines an das Fahrzeug angekoppelten ungebremsten Anhängers festgestellt wird, wenn das Verhältnis (v) zwischen dem Bremsdruck (p_{THZ}) in dem Hauptbremszylinder (3) und der Fahrzeugverzögerung (|b|) größer als der vorgegebene Schwellenwert ist.

8. Verfahren nach einem der vorangegangenen Ansprüche, **dadurch gekennzeichnet, dass** mehrere Wertepaare mit jeweils einem Wert des Bremsdrucks (p_{THZ}) und einem Wert der Fahrzeugverzögerung (|b|) zu verschiedenen Zeitpunkten während eines Bremsvorgangs erfasst werden, und dass für jedes Wertepaar das Verhältnis zwischen dem Wert des Bremsdrucks (p_{THZ}) und dem Wert der Fahrzeugverzögerung (|b|) bestimmt wird.

9. Verfahren nach einem der vorangegangenen Ansprüche, **dadurch gekennzeichnet, dass** die Überprüfung, ob ein ungebremster Anhänger an das Fahrzeug angekoppelt ist, erfolgt, indem aus den für die mehreren Wertepaare bestimmten Verhältnissen (v) ein Mittelwert berechnet und mit dem vorgegebenen Schwellenwert verglichen wird.

10. Verfahren nach einem der vorangegangenen Ansprüche, **dadurch gekennzeichnet, dass** das Vorhandensein eines an das Fahrzeug angekoppelten ungebremsten Anhängers festgestellt wird, wenn der Mittelwert den Schwellenwert überschreitet.

11. Verfahren nach einem der vorangegangenen Ansprüche, **dadurch gekennzeichnet, dass** die Überprüfung, ob ein ungebremster Anhänger an das Fahrzeug angekoppelt ist, anhand einer Prüfung einer Belegung der elektrischen Anschlussverbindungen zwischen dem Fahrzeug und dem Anhänger erfolgt.

12. Verfahren nach Anspruch 9, **dadurch gekennzeichnet, dass** das Vorhandensein eines an das Fahrzeug angekoppelten ungebremsten Anhängers festgestellt wird, wenn von den Anschlussverbindungen des Anhängers eine Verbindung zur Ansteuerung einer Bremsanlage des Anhängers nicht belegt ist.

13. Verfahren nach einem der vorangegangenen Ansprüche, **dadurch gekennzeichnet, dass** überprüft wird, ob ein Stecker in einer Anhängersteckdose des Fahrzeugs eingesteckt ist, und dass die Überprüfung, ob ein ungebremster Anhänger an das Fahrzeug angekoppelt ist, nur dann durchgeführt wird, wenn festgestellt worden ist, dass ein Stecker in der Anhängersteckdose des Fahrzeugs eingesteckt ist.

## Claims

1. Method for increasing the braking action in a motor vehicle having a hydraulic brake installation, in which an energy supply unit, by means of which the brake pressure is increased in at least one wheel brake, is switched on when the brake pressure set by the driver in a brake master cylinder overshoots an activation threshold defined as the function of a determined vehicle deceleration, **characterized in that** a check is made as to whether an unbraked trailer is coupled to the vehicle, and **in that** the activation threshold (p_{AS}) is increased if the presence of an unbraked trailer coupled to the vehicle is ascertained.

2. Method according to Claim 1, **characterized in that** the check as to whether an unbraked trailer is coupled to the vehicle is carried out by means of a comparison between at least one value, prevailing during a braking action, of the brake pressure (p_{THZ}) and an essentially simultaneously prevailing value of the vehicle deceleration (|b|).

3. Method according to Claim 2, **characterized in that** a check is made as to whether the brake pressure (p_{THZ}) overshoots a locking pressure, and **in that** the comparison is carried out only when it is ascertained that the brake pressure (p_{THZ}) lies below the locking pressure.

4. Method according to Claim 3, **characterized in that** the check as to whether the brake pressure (p_{THZ}) overshoots the locking pressure is carried out by means of a signal which indicates the activation state of an anti-lock system.

5. Method according to one of Claims 2 to 4, **characterized in that** the comparison is carried out only when the value of the brake pressure (p_{THZ}) lies within a stipulated pressure range and/or when the rate of change of the brake pressure (p_{THZ}) lies below a stipulated gradient threshold value.

6. Method according to one of the preceding claims, **characterized in that**, in the check as to whether an unbraked trailer is coupled to the vehicle, a ratio (v) between the value of the brake pressure (p_{THZ}) and the value of the vehicle deceleration (|b|) is compared with a stipulated threshold value.

7. Method according to one of the preceding claims, **characterized in that** the presence of an unbraked trailer coupled to the vehicle is ascertained when the ratio (v) between the brake pressure (p_{THZ}) in the brake master cylinder (3) and the vehicle deceleration (|b|) is higher than the stipulated threshold value.

8. Method according to one of the preceding claims, **characterized in that** a plurality of pairs of values, in each case with a value of the brake pressure (p_{THZ}) and with a value of the vehicle deceleration (|b|), are detected at various time points during a braking action, and **in that** the ratio between the value of the brake pressure (p_{THZ}) and the value of the vehicle deceleration (|b|) is determined for each pair of values.

9. Method according to one of the preceding claims, **characterized in that** the check as to whether an unbraked trailer is coupled to the vehicle is carried out by calculating an average value from the ratios (v) determined for the plurality of pairs of values and by comparing it with the stipulated threshold value.

10. Method according to one of the preceding claims, **characterized in that** the presence of an unbraked trailer coupled to the vehicle is ascertained when the average value overshoots the threshold value.

11. Method according to one of the preceding claims, **characterized in that** the check as to whether an unbraked trailer is coupled to the vehicle is carried out by means of a check of occupancy of the electrical junctions between the vehicle and the trailer.

12. Method according to Claim 9, **characterized in that** the presence of an unbraked trailer coupled to the vehicle is ascertained when, of the junctions of the trailer, a connection for activating a brake installation of the trailer is not occupied.

13. Method according to one of the preceding claims, **characterized in that** a check is made as to whether a plug is plugged into a trailer socket of the vehicle, and **in that** the check as to whether an unbraked trailer is coupled to the vehicle is carried out only when it has been ascertained that a plug is plugged in the trailer socket of the vehicle.

## Revendications

1. Procédé d'augmentation de l'effet de freinage d'un véhicule automobile doté d'une installation hydraulique de freinage, et dans lequel une unité d'alimentation en énergie au moyen de laquelle la pression de freinage est augmentée dans le frein d'au moins une roue est branchée si la pression de freinage définie par le conducteur dans un cylindre principal de frein dépasse un seuil d'activation défini en fonction de la décélération qui a été déterminée pour le véhicule, **caractérisé en ce que**
on vérifie si une remorque non freinée est accouplée au véhicule et **en ce que**
le seuil d'activation (p_{AS}) est augmenté au cas où il est constaté qu'une remorque non freinée est accouplée au véhicule.

2. Procédé selon la revendication 1, **caractérisé en ce que** la vérification de l'accouplement éventuel d'une remorque non freinée au véhicule s'effectue à l'aide d'une comparaison entre au moins une valeur de la pression de freinage (p_{THZ}) qui règne pendant une opération de freinage et une valeur de la décélération (|b|) du véhicule qui prévaut essentiellement au même moment.

3. Procédé selon la revendication 2, **caractérisé en ce que** l'on vérifie si la pression de freinage (p_{THZ}) dépasse une pression de blocage et **en ce que** la comparaison n'est réalisée que si l'on constate que la pression de freinage (p_{THZ}) est supérieure à la pression de blocage.

4. Procédé selon la revendication 3, **caractérisé en ce que** la vérification du dépassement éventuellement de la pression de blocage par la pression de freinage (p_{THZ}) s'effectue à l'aide d'un signal qui indique l'état d'activation d'un système anti-blocage.

5. Procédé selon l'une des revendications 2 à 4, **caractérisé en ce que** la comparaison n'est réalisée que si la valeur de la pression de freinage (p_{THZ}) est située à l'intérieur d'une plage de pressions prédéterminée et/ou si un taux de modification de la pression de freinage (p_{THZ}) est situé en dessous d'une valeur prédéterminée de seuil de gradient.

6. Procédé selon l'une des revendications précédentes, **caractérisé en ce que** lors de la vérification de l'accouplement éventuel d'une remorque non freinée au véhicule, un rapport (v) entre la valeur de la pression de freinage (p_{THZ}) et la valeur de la décélération du véhicule (|b|) est comparée à une valeur de seuil prédéterminée.

7. Procédé selon l'une des revendications précédentes, **caractérisé en ce que** la présence d'une remorque non freinée accouplée au véhicule est constatée si le rapport (v) entre la pression de freinage (p_{THZ}) qui règne dans le cylindre principal de frein (3) et la décélération (|b|) du véhicule est supérieur à la valeur de seuil prédéterminée.

8. Procédé selon l'une des revendications précédentes, **caractérisé en ce que** plusieurs paires de valeurs qui comprennent chacune une valeur de la pression de freinage (p_{THZ}) et une valeur (|b|) de la décélération du véhicule en différents instants pendant une opération de freinage sont déterminées et **en ce que** pour chaque paire de valeurs, le rapport entre la valeur de la pression de freinage (p_{THZ}) et la valeur (|b|) de la décélération du véhicule est déterminée.

9. Procédé selon l'une des revendications précédentes, **caractérisé en ce que** la vérification qu'une remorque non freinée est éventuellement accouplée au véhicule s'effectue en calculant une valeur moyenne à partir des rapports (v) définis pour les différentes paires de valeurs et en la comparant à la valeur de seuil prédéterminée.

10. Procédé selon l'une des revendications précédentes, **caractérisé en ce que** la présence d'une remorque non freinée accouplée au véhicule est constatée si la valeur moyenne dépasse la valeur de seuil.

11. Procédé selon l'une des revendications précédentes, **caractérisé en ce que** la vérification qu'une remorque non freinée est accouplée au véhicule s'effectue à l'aide de la vérification de l'occupation des raccordements électriques entre le véhicule et la remorque.

12. Procédé selon la revendication 9, **caractérisé en ce que** la présence d'une remorque non freinée accouplée au véhicule est constatée si une liaison de commande d'une installation de freinage de la remorque n'est pas occupée par les liaisons de raccordement.

13. Procédé selon l'une des revendications précédentes, **caractérisé en ce qu'**on vérifie si une fiche a été enfichée dans une prise de remorque du véhicule et **en ce que** la vérification de l'accouplement éventuel d'une remorque non freinée au véhicule n'est réalisée que s'il a été constaté qu'une fiche a été enfichée dans la prise de remorque du véhicule.
